Europäisches Patentamt

European Patent Office

Office européen des brevets

(19)

(11) EP 0 781 000 A2

(12) **EUROPÄISCHE PATENTANMELDUNG**

(43) Veröffentlichungstag:
25.06.1997 Patentblatt 1997/26

(51) Int Cl.⁶: H04B 10/16

(21) Anmeldenummer: 96402743.7

(22) Anmeldetag: 16.12.1996

(84) Benannte Vertragsstaaten:
DE FR GB IT NL

(30) Priorität: 20.12.1995 DE 19547602

(71) Anmelder: ALCATEL ALSTHOM COMPAGNIE
GENERALE D'ELECTRICITE
75008 Paris (FR)

(72) Erfinder: Braun, Klaus
70435 Stuttgart (DE)

(74) Vertreter: Schätzle, Albin, Dipl.-Phys. et al
Alcatel Alsthom
Intellectual Property Department,
Postfach 30 09 29
70449 Stuttgart (DE)

(54) **Breitbandverstärkereinheit und Sende-/Empfangseinheit für ein Breitbandkommunikationssystem**

(57) Bei der Übertragung von analogen Breitbandsignalen über größere Entfernungen sind in Abständen Verstärker notwendig, deren Betriebsweise überwacht wird. Zusätzlich treten bei der Verstärkung hochfrequenter analoger Signale nichtlineare Verzerrungen auf, die sich fortpflanzen und die Signalqualität verschlechtern. Die Überwachung eines Verstärkers erfolgt über einen dem Verstärker (AMP1) nachgeschalteten Detektor (DET), der eine Gleichrichterfunktion beinhaltet. Die Eingangsschaltung des Detektors (DET) ist wechselspannungsmäßig eine Kompensationsschaltung für die nichtlinearen Verzerrungen. Die Eingangsschaltung beinhaltet zwei Widerstände (R1, R2) und eine Diode (D1). Der Ausgang des Verstärkers (AMP1) ist über den ersten Widerstand (R1) mit der Parallelschaltung aus zweitem Widerstand (R2) und Diode (D1) verbunden. Über die beiden Widerstände (R1, R2) erfolgt die Einstellung der Amplitude der Verzerrungsprodukte, über die Polung der Diode (D1) deren Phasenlage.

Fig.2

**Beschreibung**

Die Erfindung betrifft eine Breitbandverstärkereinheit nach Patentanspruch 1 und eine Sende-/Empfangseinheit nach Patentanspruch 6. Eine Breitbandverstärkereinheit dient als Zwischenverstärker bei der Übertragung von Signalen über optische, elektrische oder hybride Breitbandkommunikationssysteme. Sie kann z.B. im Sender, Regenerator oder Empfänger eingesetzt werden.

Aus EP 0402044 B1 ist ein optischer Empfänger bekannt. Der optische Empfänger beinhaltet eine Photodiode, einen elektrischen Verstärker und einen Signaldetektor. Der Signaldetektor dient der Überwachung der Betriebsweise des Verstärkers. Im Signaldetektor wird der Signalpegel des Ausgangssignals des Verstärkers detektiert. Der Eingang des Signaldetektors ist dazu mit dem Ausgang des Verstärkers verbunden. Der Ausgang des Signaldetektors liefert ein Kontrollsignal. Im Verstärker treten nichtlineare Verzerrungen auf, die durch den Signaldetektor verstärkt werden.

Aus EP 0582874 A1 ist eine Schaltungsanordnung zur frequenzabhängigen Kompensation des Klirrens zweiter Ordnung in einem Übertragungssystem bekannt. Die Schaltungsanordnung beinhaltet einen Verstärker und ein Klirr-Anpassungsglied, das dem Verstärker nachgeschaltet und in den Signalpfad eingefügt ist. Zur Kompensation des Klirrens wird ein vom Nutzsignal abhängiges Verstärker-Klirren erzeugt, das als Zusatzsignal mit übertragen werden muß.

Es ist deshalb Aufgabe der Erfindung, eine Breitbandverstärkereinheit und eine Sende-/Empfangseinheit zur Verfügung zu stellen, mittels derer nichtlineare Verzerrungen technisch weniger aufwendig kompensiert werden können.

Diese Aufgabe wird durch die Lehre der Patentansprüche 1 und 6 gelöst. Vorteilhafte Ausgestaltungen sind den abhängigen Patentansprüchen 2 bis 5 zu entnehmen.

Ein besonderer Vorteil der Erfindung ist die Überwachbarkeit mehrerer Breitbandverstärkereinheiten von einer Zentrale aus.

Ein weiterer Vorteil der Erfindung ist die Realisierbarkeit auf einer integrierten Schaltung.

Im folgenden wird die Erfindung anhand zweier Ausführungsbeispiele unter Zuhilfenahme der Figuren 1 bis 5 erläutert. Es zeigen:

Fig. 1    eine schematische Darstellung einer erfindungsgemäßen Sende-/Empfangseinheit,

Fig. 2    einen schematisch dargestellten Aufbau einer erfindungsgemäßen Breitbandverstärkereinheit,

Fig. 3    ein Ersatzschaltbild der Eingangsschaltung des Detektors aus Fig. 2,

Fig. 4    ein schematisch dargestellten Aufbau einer weiteren erfindungsgemäßen Breitbandverstärkereinheit, und

Fig. 5    ein Ersatzschaltbild der Eingangsschaltung des Detektors aus Fig. 4.

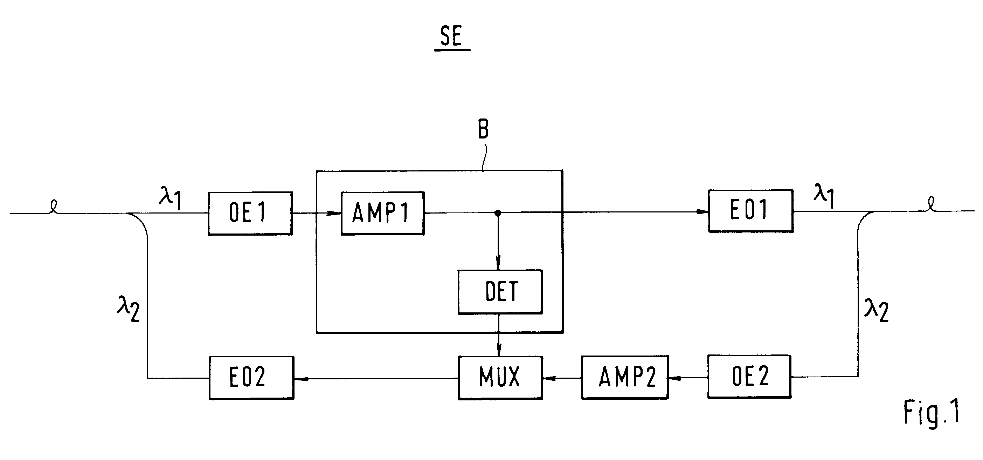

Ein erstes Ausführungsbeispiel der Erfindung wird nun anhand der Figuren 1 bis 3 beschrieben. Fig. 1 zeigt eine schematische Darstellung einer Sende-/Empfangseinheit SE. Die Sende-/Empfangseinheit SE wird in einem Breitbandkommunikationssystem als Zwischenverstärker verwendet. Das Breitbandkommunikationssystem ist z.B. ein optisches Übertragungssystem, in dem optische Signale von einer Zentrale über Glasfaserstrecken und ein baumförmiges Übertragungsnetz zu mehreren Teilnehmern übertragen werden. Die Übertragung der optischen Signale erfolgt mit der Wellenlänge $\lambda_1$, z.B. 1520 nm. Das Breitbandkommunikationssystem ist rückkanalfähig, d.h. die Teilnehmer können optische Signale in einem Rückkanal zur Zentrale übertragen. Die Übertragung erfolgt mit der Wellenlänge $\lambda_2$, z.B. 1390 nm. Die optischen Signale der Wellenlängen $\lambda_1$ und $\lambda_2$ müssen aufgrund von Dämpfungserscheinungen auf den Glasfaserstrecken in vorgegebenen Abständen, z.B. nach 200 km, zwischenverstärkt werden. Die Zwischenverstärkung erfolgt in der Sende-/Empfangseinheit SE. Die Sende-/Empfangseinheit SE beinhaltet dazu zwei optisch/elektrische Umsetzer 0E1 und 0E2, zwei elektrische Verstärker AMP1 und AMP2 und zwei elektrisch/ optische Umsetzer E01 und E02. Die optischen Signale mit der Wellenlänge $\lambda_1$ werden in dem optisch/elektrischen Umsetzer 0E1 in elektrische Signale umgesetzt, die dem Verstärker AMP1 zugeführt werden, in dem sie verstärkt werden. Die verstärkten elektrischen Signale werden dem elektrisch/optischen Umsetzer E01 zugeführt, in dem sie in optische Signale umgesetzt werden, die in eine Glasfaserleitung eingespeist werden. Die optischen Signale mit der Wellenlänge $\lambda_2$ werden im optisch/elektrischen Umsetzer E02 in elektrische Signale umgesetzt, die dem Verstärker AMP2 zugeführt werden, in dem sie verstärkt werden. Die verstärkten elektrischen Signale werden dem elektrisch/optischen Umsetzer E02 zugeführt, in dem sie in optische Signale umgesetzt werden, die in eine Glasfaserleitung eingespeist werden. Die optisch/elektrisch Umsetzer 0E1 und 0E2 beinhalten jeweils eine Photodiode, die elektrisch/optischen Umsetzer E01 und E02 jeweils einer Laserdiode.

Die Sende-/Empfangseinheit SE beinhaltet des weiteren einen Detektor DET und einen Multiplexer MUX.

Der Verstärker AMP1 und der Detektor DET bilden eine Breitbandverstärkereinheit B. Die Breitbandverstärkereinheit B hat einen Signaleingang, einen Signalausgang und einen Kontrollausgang. Der Signaleingang ist mit dem Ausgang des optisch/elektrischen Umsetzers 0E1 und dem Eingang des Verstärkers AMP1 verbunden. Der Signalausgang ist mit dem Ausgang des Verstärkers AMP1, dem Eingang des Detektors DET und dem Eingang des elektrisch/optischen Umsetzers E01 verbunden. Der Kontrollausgang ist mit dem Ausgang des Detektors DET verbunden.

Der Verstärker AMP1 ist ein breitbandiger Verstärker zum Verstärken hochfrequenter analoger Signale, z.B. analoge Signale im Bereich von 100 bis 600 MHz. Bei der Verstärkung treten z.B. aufgrund von nichtlinearen Eigenschaften der aktiven Verstärkungselemente nichtlineare Verzerrungen auf, die sich von Verstärker zu Verstärker fortpflanzen und die Signalqualität verschlechtern, was z.B. durch Bildstörungen bei Fernsehsignalen (CATV-Netz als Breitbandkommunikationsnetz) deutlich wird.

Der Detektor DET hat zwei Aufgaben. Erstens dient er der Überwachung der Betriebsweise des Verstärkers AMP1. Zweitens dient er der Kompensation von im Verstärker AMP1 erzeugten nichtlinearen Verzerrungen.

Der Detektor beinhaltet einen Gleichrichter. Im Gleichrichter werden die verstärkten elektrischen Signale gleichgerichtet und über einen Komparator mit einem Referenzwert verglichen. Übersteigt die Differnz zwischen gleichgerichtetem Wert und Referenzwert eine vorgegebene Schwelle, so schaltet der Komparator und am Kontrollausgang der Breitbandverstärkereinheit B erhält man einen Signalwert, der einer logischen Eins entspricht. Arbeitet der Verstärker einwandfrei, so ist der Kontrollausgang stets logisch Eins. Fällt die Differenz unter die vorgegebene Schwelle, z.B. verursacht durch ein zu geringes Eingangssignal am Verstärkereingang oder durch nicht optimale Verstärkung, so erhält man am Komparatorausgang und am Kontrollausgang einen Wert, der einer logischen Null entspricht. Das Signal am Kontrollausgang der Breitbandverstärkereinheit B wird dem Multiplexer MUX zugeführt und über den Multiplexer MUX im Rückkanal zur Zentrale übertragen, in dem das Signal z.B. in einen freien Zeitschlitz eingefügt wird oder auf einer unbenutzten Frequenz übertragen wird. Im ersten Fall ist der Multiplexer MUX ein Zeitmultiplexer, im zweiten Fall ein Frequenzmultiplexer. Die Betriebsweise des Verstärkers AMP1 wird somit über den Gleichrichter überwacht.

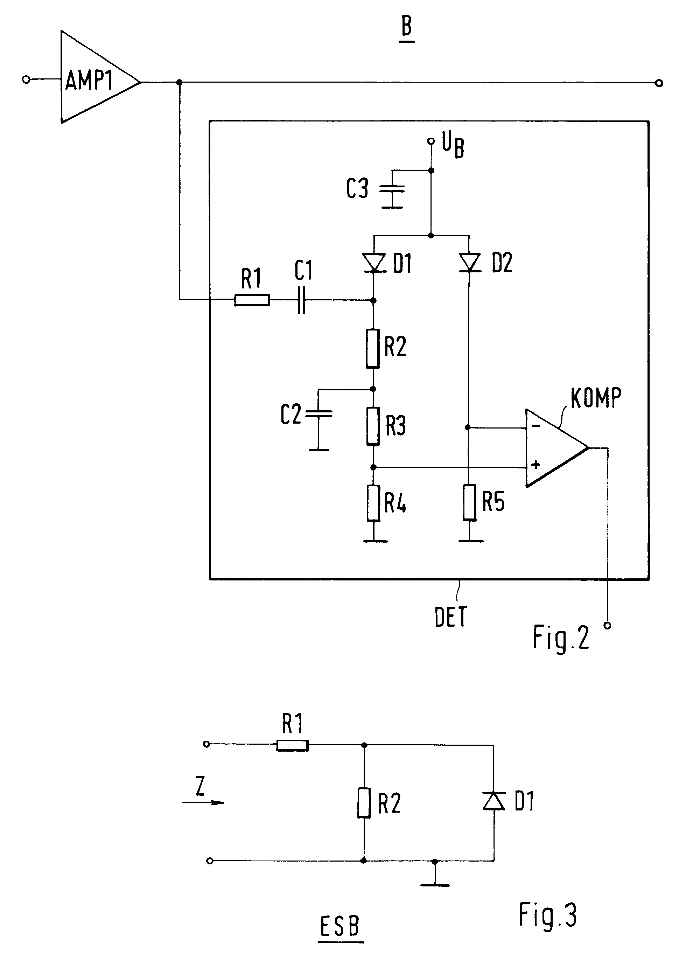

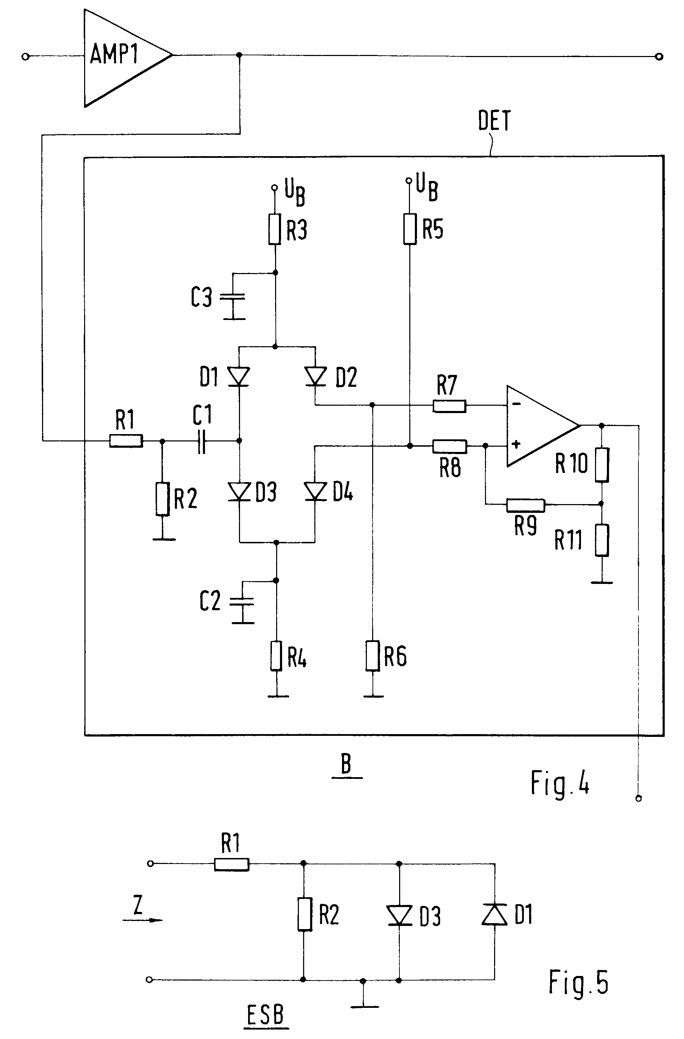

Die Eingangsschaltung des Gleichrichters ist wechselspannungsmäßig eine Kompensationsschaltung für nichtlineare Verzerrungen. Damit können mit dem Gleichrichter auch gleichzeitig nichtlineare Verzerrungen kompensiert werden. (Zwei Ausführungsformen der Kompensationsschaltung werden zu Fig. 3 und Fig. 5 beschrieben).

Fig. 2 zeigt einen schematisch dargestellten Aufbau der Breitbandverstärkereinheit B aus Fig. 1. Die Breitbandverstärkereinheit B beinhaltet den Verstärker AMP1 und den Detektor DET, die wie oben beschrieben miteinander verschaltet sind.

Der Detektor DET beinhaltet einen Komparator KOMP, der hier als Operationsverstärker ausgeführt ist, fünf Widerstände R1 bis R5, zwei Dioden D1 und D2 und drei Kondensatoren C1 bis C3, die auf folgende Art und Weise miteinander verschaltet sind:

Eine nicht dargestellte Gleichspannungsquelle liefert die Betriebsspannung $U_B$. Der Anschluß mit der Betriebsspannung $U_B$ ist über eine Serienschaltung aus Diode D1, in Flußrichtung gepolt, Widerstand R2, Widerstand R3, Widerstand R4 mit Masse verbunden. Ferner ist der Anschluß mit der Betriebsspannung $U_B$ über eine Serienschaltung aus Diode D2, in Flußrichtung gepolt, Widerstand R5 mit Masse verbunden. Zwischen Diode D2 und Widerstand R5 ist der negative Eingang des Komparators KOMP angeschlossen. Zwischen Widerstand R3 und Widerstand R4 ist der positive Eingang des Komparators KOMP angeschlossen. Zwischen Widerstand R3 und Widerstand R4 ist der positive Eingang des Komparators KOMP angeschlossen. Zwischen Widerstand R2 und Widerstand R3 ist der mit Masse verbundene Kondensator C2 angeschlossen. Zwischen Diode D1 und dem Anschluß mit der Betriebsspannung $U_B$ ist der mit Masse verbundene Kondensator C3 angeschlossen. Zwischen Diode D1 und Widerstand R2 ist die Serienschaltung aus Kondensator C1 und Widerstand R1 angeschlossen. Der Widerstand R1 ist mit dem Eingang des Detektors DET verbunden. Der Komparatorausgang bildet den Ausgang des Detektors DET.

Die hochfrequenten analogen Signale am Ausgang des Verstärkers AMP1 werden über den Widerstand R1 und den Kondensator C1 in den Stromzweig mit der Diode D1 und dem Widerstand R2 eingekoppelt. Sie führen zu einer zusätzlichen Gleichspannung an der Diode D1, was einen erhöhten Spannungsabfall an den Widerständen R2 bis R4 hervorruft. Über die Kondensatoren C3 und C2 wird die hochfrequente Spannung abgeblockt. Ohne die Ausgangssignale des Verstärkers AMP1 ist die Schaltungsanordnung des Detektors DET im Gleichgewicht, d.h. an den beiden Dioden D1 und D2 liegen gleiche Spannungswerte an. Durch den Spannungsteiler aus den Widerständen R2, R3 und R4 wird die Spannung am positiven Eingang des Komparators KOMP heruntergeteilt, was zu einer logischen Null am Ausgang des Komparators KOMP führt. Mit den Ausgangssignalen des Verstärkers AMP1 kommt es zu einem verminderten Spannungsabfall an der Diode D1, was dazu führt, daß sich der Spannungswert am positven Eingang des Komparators KOMP erhöht. Ist die Änderung genügend groß, so schaltet der Komparator KOMP und es liegt eine logische Eins an seinem Ausgang an. Mit den Widerständen R2 bis R5 wird die Schaltschwelle eingestellt. Der Detektor DET hat somit über die Diode D1 eine Gleichrichterfunktion und über den Komparator KOMP eine Überwachungsfunktion.

Fig. 3 zeigt in 1. Näherung ein Ersatzschaltbild ESB der Eingangsschaltung des Detektors aus Fig. 2. In 1. Näherung sind die Kondensatoren C1 bis C3 für die hochfrequenten Ausgangssignale des Verstärkers AMP1 wechselspannungsmäßig als Kurzschlüsse zu betrachten, so daß sich als Ersatzschaltbild ESB eine Serienschaltung aus Widerstand R1 und der Parallelschaltung aus Widerstand R2 und Diode D1 ergibt. Die Eingangsimpedanz Z ist durch:

$$Z = R1 + \frac{R2 \cdot D1}{R2 + D1}$$

gegeben. Der Impedanzwert von Diode D1 ist aus der typischen Diodenkennlinie aus dem U-I-Diagramm einer Diode gegeben.

Die Eingangsschaltung des Detektors DET erzeugt bei Anlegen von Signalen nichtlineare Verzerrungsprodukte zweiter und höherer Ordnung entsprechend der Exponentialfunktion der Diodenkennlinie der Diode D1. Diese Verzerrungsprodukte werden über den Widerstand R1 auf den Eingang gekoppelt. Am Eingang der Eingangsschaltung des Detektors DET liegen die Ausgangssignale des Verstärkers AMP1, dessen nichtlineare Verzerrungen durch die Verzerrungsprodukte kompensiert werden, in dem die Amplituden der Klirrprodukte der nichtlinearen Verzerrungen und der Verzerrungsprodukte gleichgroß und ihre Phasenlagen entgegengesetzt gewählt werden. Die Phasenlage der Verzerrungsprodukte zweiter Ordnung des Detektors DET wird durch die Polung der Diode D1 festgelegt. Die Amplitude der Verzerrungsprodukte wird durch die Widerstandswerte der Widerstände R1 und R2 bestimmt. Der Wert des Widerstandes R1 kann auch den Wert O Ohm haben. In diesem Fall kann er eingespart werden. Die Eingangsschaltung des Detektors DET ist somit wechselspannungsmäßig eine Kompensationsschaltung für die nichtlinearen Verzerrungen.

Ein zweites Ausführungsbeispiel der Erfindung wird nun anhand der Figuren 4 und 5 mit Rückbezug auf Fig. 1 beschrieben.

Fig. 4 zeigt einen schematisch dargestellten Aufbau der Breitbandverstärkereinheit B aus Fig. 1. Die Breitbandverstärkereinheit B beinhaltet den Verstärker AMP1 und den Detektor DET, die wie oben beschrieben miteinander verschaltet sind.

Der Detektor DET beinhaltet einen Komparator KOMP, der hier als Operationsverstärker ausgeführt ist, elf Widerstände R1 bis R11, vier Dioden D1 bis D4 und drei Kondensatoren C1 bis C3, die auf folgende Art und Weise miteinander verschaltet sind:

Eine nicht dargestellte Gleichspannungsquelle liefert die Betriebsspannung $U_B$. Der Anschluß mit der Betriebsspannung $U_B$ ist über eine Serienschaltung aus Widerstand R3, Diode D1, Diode D2, beide in Flußrichtung gepolt, Widerstand R4 mit Masse verbunden. Der Anschluß mit der Betriebsspannung $U_B$ ist ferner über eine Serienschaltung aus Widerstand R5, Widerstand R8, Widerstand R9, Widerstand R11 mit Masse verbunden. Zwischen Widerstand R3 und Diode D1 ist der mit Masse verbundene Kondensator C3, sowie eine Serienschaltung aus Diode D2 und Widerstand R7 angeschlossen, der mit dem negativen Eingang des Komparators KOMP verbunden ist. Zwischen Diode D2 und Widerstand R7 ist der mit Masse verbundene Widerstand R6 angeschlossen. Zwischen Widerstand R5 und Widerstand R8 und zwischen Diode D3 und R4 ist die Diode D4, in Flußrichtung gepolt, geschaltet. Zwischen Diode D3 und Widerstand R4 ist ferner der mit Masse verbundene Kondensator C2 angeschlossen. Zwischen Widerstand R8 und Widerstand R9 ist der positive Eingang des Komparators KOMP angeschlossen. Zwischen Widerstand R7 und Ausgang des Komparators KOMP liegt Widerstand R10. Zwischen Diode D1 und Diode D3 ist eine mit Masse verbundene Serienschaltung aus Kondensator C1 und Widerstand R2 angeschlossen. Zwischen Kondensator C1 und Widerstand R1 ist der mit dem Eingang des Detektors DET verbundene Widerstand R1 angeschlossen.

Die hochfrequenten analogen Signale am Ausgang des Verstärkers AMP1 werden über die Widerstände R1 und R2 und dem Kondensator C1 in den Stromzweig mit den Dioden D1 und D3 eingekoppelt. Sie führen zu einer Spannungsänderung an den Dioden D1 und D3, was über die Dioden D2 und D4, die zur Temperaturkompensation dienen, auch zu einer Spannungsänderung an den Eingängen des Komparators KOMP führt. Ohne die Ausgangssignale des Verstärkers AMP1 ist die Schaltungsanordnung des Detektors DET im Gleichgewicht, d.h. am positiven und am negativen Eingang des Komparators KOMP liegen vorgegebene Spannungswerte, deren Differenz unterhalb der Schaltschwelle liegt, an, was zu einer logischen Null am Ausgang des Komparators KOMP führt. Die Gleichgewichtslage wird durch die Wahl der Widerstandswerte R3 bis R11 eingestellt. Mit den Ausgangssignalen des Verstärkers AMP1 kommt es zu einem verminderten Spannungsabfall an den Dioden D1 und D3, was dazu führt, daß sich der Spannungswert am positiven Eingang des Komparators KOMP erhöht und der Spannungswert am negativen Eingang sich erniedrigt. Ist die Änderung genügend groß, so schaltet der Komparator KOMP und es liegt eine logische Eins an seinem Ausgang an. Der Detektor DET hat somit über die Dioden D1 und D3 eine Gleichrichterfunktion und über den Komparator eine Überwachungsfunktion. Ein Dimensionierungsbeispiel ist z.B. durch folgende Zahlenwerte gegeben:

$U_B$ = 24 Volt, C1 = C2 = C3 = 22 nano Farad, R1 = 1 kilo Ohm,
R2 = 330 Ohm, R3 = R4 = 100 kilo Ohm, R5 = R6 = 200 kilo Ohm,
R7 = R8 = 95 kilo Ohm.

Fig. 5 zeigt in 1. Näherung ein Ersatzschaltbild ESB der Eingangsschaltung des Detektors DET aus Fig. 4. In 1. Näherung sind die Kondensatoren C1 bis C3 für die hochfrequenten Ausgangssignale des Verstärkers AMP1 wechselspannungsmäßig als Kurzschlüsse zu betrachten, so daß sich als Ersatzschaltbild eine Serienschaltung aus Widerstand R1 und der Parallelschaltung aus Widerstand R2 und den Dioden D1 und D3.

Die Dioden D1 und D3 sind entgegengesetzt gepolt. Die Eingangsimpedanz ist gegeben durch:

$$Z = R1 + \frac{R2 \cdot D1 \cdot D3}{R2 \cdot D1 + R2 \cdot D3 + D1 \cdot D3}.$$

Die Impedanzwerte der Dioden D1 und D3 ist aus der typischen Diodenkennlinie aus dem U-I-Diagramm einer Diode gegeben.

Die Eingangsschaltung des Detektors DET erzeugt bei Anlegen von Signalen nichtlineare Verzerrungsprodukte dritter Ordnung entsprechend der Exponentialfunktionen der Dioden D1 und D3. Die Verzerrungsprodukte zweiter Ordnung von Diode D1 und Diode D3 heben sich gegenseitig auf. Diese Verzerrungsprodukte dritter Ordnung werden über den Widerstand R1 auf den Eingang gekoppelt. Am Eingang der Eingangsschaltung des Detektors DET liegen die Ausgangssignale des Verstärkers AMP1, dessen nichtlineare Verzerrungen durch die Verzerrungsprodukte kompensiert werden, indem die Amplituden der Klirrprodukte der nichtlinearen Verzerrungen und der Verzerrungsprodukte über die Widerstände R1 und R2 gleich groß gewählt werden. Der Widerstand R1 kann auch den Wert Null Ohm haben. Der Widerstand R2 kann auch den Wert 00 haben. In diesen Fällen können einer der beiden oder beide Widerstände R1 und R2 eingespart werden. Die Phasenlage der Verzerrungsprodukte ist entgegengesetzt zu der Phasenlage der linearen Verzerrungen, erzeugt von üblichen Halbleiterverstärkern. Die Eingangsschaltung des Detektors DET ist somit wechselspannungsmäßig eine Kompensationsschaltung für die nichtlinearen Verzerrungen.

Bei den Ausführungsbeispielen ist das Breitbandkommunikationssystem ein rein optisches. Anstelle bei einem rein optischen kann die Erfindung auch bei einem rein elektrischen oder einem hybriden Breitbandkommunikationsnetz verwendet werden.

Bei den Ausführungsbeispielen dient die Sende-/Empfangseinheit als Zwischenverstärker. Die Breitbandverstärkereinheit der Sende-/Empfangseinheit kann auch in der Zentrale oder einem Empfänger verwendet werden.

Bei den Ausführungsbeispielen werden die nichtlinearen Verzerrungen des Verstärkers in Abwärtsrichtung, d.h. von der Zentrale zu den Teilnehmern, kompensiert. Zusätzlich können auch die nichtlinearen Verzerrungen des Verstärkers in Aufwärtsrichtung kompensiert werden, in dem in der Sende-/Empfangseinheit aus Fig. 1 zwischen Verstärker AMP2 und Multiplexer MUX der Eingang eines Detektors, z.B. baugleich zu dem Detektor DET angeschlossen wird. Wird nun gesteuert durch eine Steuereinheit der Multiplexer derart angesteuert, daß im Falle eines fehlerbehafteten Betriebs des Verstärkers AMP2 nicht die Ausgangssignale des Verstärkers AMP2, sondern z.B. eine vorgegebene Fehlermeldung mit Angabe der individuellen Nummer der Sende-/Empfangseinheit im Rückkanal übertragen wird, so kann von der Zentrale aus nicht nur der Verstärker AMP1, sondern auch der Verstärker AMP2 überwacht und im Fehlerfall lokalisiert werden. Dazu ist es erforderlich daß die Fehlermeldung neben der Angabe der individuellen Nummer der Sende-/Empfangseinheit auch eine Angabe über den oder die fehlerbehafteten Verstärker beinhaltet.

Bei den Ausführungsbeispielen ist die Glasfaserleitung für den Rückkanal diegleiche wie die für den Vorwärtskanal in Abwärtsrichtung. Für Vorwärts- und Rückkanal können auch zwei getrennte Glasfaserleitungen verwendet werden. Der Rückkanal kann des weiteren auch über ein diensteintegrierendes digitales Netz, das sog. ISDN, realisiert sein.

**Patentansprüche**

1. Breitbandverstärkereinheit (B)

   mit einem Verstärker (AMP1) zur Verstärkung hochfrequenter analoger Signale, mit einem Detektor (DET) zur Überwachung der Betriebsweise des Verstärkers (AMP1) und zur Kompensation von im Verstärker (AMP1) erzeugten nichtlinearen Verzerrungen, mit einem Signaleingang, der mit dem Eingang des Verstärkers (AMP1) verbunden ist, mit einem Signalausgang, der mit dem Ausgang des Verstärkers (AMP1) und dem Eingang des Detektors verbunden ist und mit einem Kontrollausgang, der mit dem Ausgang des Detektors (DET) verbunden ist, bei der der Detektor (DET) einen Gleichrichter beinhaltet, dessen Eingangsschaltung wechselspannungsmäßig eine Kompensationsschaltung für die nichtlinearen Verzerrungen ist.

2. Breitbandverstärkereinheit (B) nach Anspruch 1, dadurch gekennzeichnet, daß die Eingangsschaltung zwei Widerstände (R1, R2) und eine Diode (D1) beinhaltet, und daß der Ausgang des Verstärkers (AMP1) über den ersten Widerstand (R1) mit der Parallelschaltung aus zweitem Widerstand (R2) und Diode (D1) verbunden ist.

3. Breitbandverstärkereinheit (B) nach Anspruch 1, dadurch gekennzeichnet, daß die Eingangsschaltung zwei Widerstände (R1, R2) und zwei Dioden (D1, D3) beinhaltet,

   daß der Ausgang des Verstärkers (AMP1) über den ersten Widerstand (R1) mit der Parallelschaltung aus zweitem Widerstand (R2) und den zwei Dioden (D1, D3) verbunden ist, und daß die Dioden (D1, D3) gegenpolig geschaltet sind.

4. Breitbandverstärkereinheit (B) nach Anspruch 2, dadurch gekennzeichnet, daß der Gleichrichter einen Komparator beinhaltet, und daß die Summe der Änderungen der Spannungsabfälle über den zweiten Widerstand (R2) und die Diode (D1) als Kriterium für das Schalten des Komparators dienen.

5. Breitbandverstärkereinheit (B) nach Anspruch 3, dadurch gekennzeichnet, daß der Gleichrichter einen Komparator beinhaltet, und daß die Summe der Änderungen der Spannungsabfälle über die beiden Dioden (D1, D3) als Kriterium für das Schalten des Komparators dienen.

6. Sende-/Empfangseinheit (SE) zur Übertragung von Signalen über ein rückkanalfähiges Breitbandkommunikationssystem,

   mit einer Breitbandverstärkereinheit (B) nach Anspruch 1 und einen in den Signalpfad des Rückkanals eingefügten Multiplexer (MUX), bei der die Signale am Kontrollausgang der Breitbandverstärkereinheit (B) dem Multiplexer (MUX) zuführbar und über den Multiplexer (MUX) im Rückkanal übertragbar sind.

SE

B

Fig.1

7

<u>B</u>

AMP1

U<sub>B</sub>

C3

R1   C1   D1   D2

R2

C2   R3

KOMP

R4   R5

DET

Fig.2

R1

Z →

R2   D1

<u>ESB</u>   Fig.3

Fig.4

Fig.5